# EUROPEAN PATENT APPLICATION

(11) **EP 4 068 638 A1**
(43) Date of publication of application: **05.10.2022**
(21) Application number: 19958167.9
(22) Date of filing: 31.12.2019
(51) Int. Cl.: H04B 1/40

(54) **COMMUNICATION APPARATUS AND NETWORK DEVICE**

(71) Applicant: Huawei Technologies Co., Ltd., Shenzhen, Guangdong 518129, (CN)
(72) Inventor: TANG, Haizheng, Shenzhen, Guangdong 518129 (CN); DENG, Mingjin, Shenzhen, Guangdong 518129 (CN); LI, Kan, Shenzhen, Guangdong 518129 (CN)
(74) Representative: Körber, Martin Hans
(86) International application number: PCT/CN2019/130510
(87) International publication number: WO 2021/134478

(57) **Abstract**

Embodiments of this application disclose a communication apparatus and a network device in the communication field. The communication apparatus includes a first transmission processing circuit and a first transmit filter connected to the first transmission processing circuit. The first transmission processing circuit is configured to output a signal at a first transmit frequency band and a signal at a second transmit frequency band, where a bandwidth interval between the first transmit frequency band and the second transmit frequency band is less than or equal to a first threshold. The first transmit filter is configured to filter a signal output by the first transmission processing circuit to obtain the signal at the first transmit frequency band and/or the signal at the second transmit frequency band. In embodiments of this application, the communication apparatus transmits signals at two independent transmit frequency bands by using one transmission processing circuit and one transmit filter, that is, the signals at the two transmit frequency bands share one transmission processing circuit and one transmit filter. The communication apparatus has a relatively small size and low costs.

## Description

### TECHNICAL FIELD

This application relates to the communication field, and in particular, to a communication apparatus and a network device.

### BACKGROUND

Wireless communication technologies have experienced development from analogue communication to digital communication, from single-carrier (single-carrier) communication to multi-carrier (multi-carrier) communication, and from single-mode (single-mode) communication to multi-mode (multi-mode) communication. Currently, a multi-frequency band (multi-frequency band) communication technology has become a new research hotspot of major communication equipment vendors and research institutes.

A frequency band refers to spectrum resources distributed at a specific bandwidth, and a multi-frequency band is a combination of two or more frequency bands. For example, in a universal mobile telecommunications system (Universal Mobile Telecommunications System, UMTS), a downlink frequency band of Band 1 is 2110 MHz to 2170 MHz, and an uplink frequency band of Band 1 is 1920 MHz to 1980 MHz. In a time division-synchronous code division multiple access (Time Division-Synchronous Code Division Multiple Access, TD-SCDMA) technology, a frequency band A is 1880 MHz to 1900 MHz, and a frequency band B is 2010 MHz to 2025 MHz.

A multi-frequency communication system may use a multi-frequency transceiver (Transceiver) to receive and send radio frequency signals at multiple frequency bands. However, a current mainstream multi-frequency transceiver usually has disadvantages of a large size and high costs. Therefore, a multi-frequency communication apparatus with lower costs and a smaller size needs to be researched.

### SUMMARY

Embodiments of this application provide a communication apparatus and a network device, which have a small size and low costs.

According to a first aspect, an embodiment of this application provides a communication apparatus, including a first transmission processing circuit and a first transmit filter connected to the first transmission processing circuit. The first transmission processing circuit is configured to output a signal at a first transmit frequency band and a signal at a second transmit frequency band, where a bandwidth interval between the first transmit frequency band and the second transmit frequency band is less than or equal to a first threshold. The first transmit frequency band includes a part of a frequency band of 758 MHz to 788 MHz, and the second transmit frequency band includes a part of a frequency band of 791 MHz to 821 MHz; or the first transmit frequency band includes a part of a frequency band of 729 MHz to 746 MHz, and the second transmit frequency band includes a part of a frequency band of 746 MHz to 756 MHz; or the first transmit frequency band includes a part of a frequency band of 746 MHz to 756 MHz, and the second transmit frequency band includes a part of a frequency band of 756 MHz to 768 MHz; or the first transmit frequency band includes a part of a frequency band of 729 MHz to 746 MHz, and the second transmit frequency band includes a part of a frequency band of 756 MHz to 768 MHz. The first transmit filter is configured to filter a signal output by the first transmission processing circuit to obtain the signal at the first transmit frequency band and/or the signal at the second transmit frequency band.

Optionally, the first transmit frequency band and the second transmit frequency band are separately included in different transmit frequency bands defined by the 3GPP. That is, the first transmit frequency band and the second transmit frequency band are two independent transmit frequency bands. For example, the first transmit frequency band is 758 MHz to 788 MHz, and the second transmit frequency band is 791 MHz to 821 MHz. For another example, the first transmit frequency band is 760 MHz to 775 MHz, and the second transmit frequency band is 800 MHz to 815 MHz. In this embodiment of this application, the communication apparatus transmits signals at two independent transmit frequency bands by using one transmission processing circuit and one transmit filter, that is, the signals at the two transmit frequency bands share one transmission processing circuit and one transmit filter. The communication apparatus has a relatively small size and low costs.

In an optional implementation method, the first transmit frequency band includes the part of the frequency band of 758 MHz to 788 MHz, and the second transmit frequency band includes the part of the frequency band of 791 MHz to 821 MHz. The communication apparatus further includes a second transmission processing circuit and a second transmit filter connected to the second transmission processing circuit, where the second transmission processing circuit is configured to output a signal at a third transmit frequency band, a bandwidth interval between the third transmit frequency band and the first transmit frequency band is greater than the first threshold, a bandwidth interval between the third transmit frequency band and the second transmit frequency band is greater than the first threshold, and the third transmit frequency band includes a part of a frequency band of 925 MHz to 960 MHz. The second transmit filter is configured to filter a signal output by the second transmission processing circuit to obtain the signal at the third transmit frequency band, where the first transmit filter and the second transmit filter are included in a same multiplexer.

Optionally, the first transmit frequency band, the second transmit frequency band and the third transmit frequency band are separately included in different transmit frequency bands defined by the 3GPP. That is, the first transmit frequency band, the second transmit frequency band and the third transmit frequency band are three independent transmit frequency bands. Optionally, the first transmission processing circuit and the first transmit filter correspond to one transmitter, and the second transmission processing circuit and the second transmit filter correspond to another transmitter. It should be understood that two transmitters in the communication apparatus can be used to transmit signals at three independent transmit frequency bands. In this implementation method, the communication apparatus transmits signals at three independent transmit frequency bands by using two transmission processing circuits and two transmit filters. The quantity of transmit filters is small, and therefore the communication apparatus has a relatively small size and low costs.

In an optional implementation method, the communication apparatus further includes a first receiving processing circuit and a first receive filter connected to the first receiving processing circuit. The first receive filter is configured to filter an input signal to obtain a signal at the first receive frequency band and a signal at the second receive frequency band, where a bandwidth interval between the first receive frequency band and the second receive frequency band is less than or equal to the second threshold, the first receive frequency band includes a part of a frequency band of 832 MHz to 862 MHz, and the second receive frequency band includes a part of a frequency band of 880 MHz to 915 MHz. The first receiving processing circuit is configured to receive the signal at the first receive frequency band and the signal at the second receive frequency band that are input by the first receive filter.

Optionally, the first receive frequency band and the second receive frequency band are separately included in different receive frequency bands defined by the 3GPP. That is, the first receive frequency band and the second receive frequency band are two independent receive frequency bands. In this implementation method, the communication apparatus transmits signals at three independent transmit frequency bands by using two transmission processing circuits and two transmit filters, and receives signals at two independent receive frequency bands by using one receiving processing circuit and one receive filter. The quantity of filters is small, and therefore the communication apparatus has a relatively small size and low costs.

In an optional implementation method, the communication apparatus further includes a second receiving processing circuit and a second receive filter connected to the second receiving processing circuit. The second receive filter is configured to filter an input signal to obtain a signal at a third receive frequency band, where a bandwidth interval between the third receive frequency band and the first receive frequency band is greater than the second threshold, a bandwidth interval between the third receive frequency band and the second receive frequency band is greater than the second threshold, and the third receive frequency band includes a part of a frequency band of 703 MHz to 733 MHz. The second receiving processing circuit is configured to receive the signal at the third receive frequency band that is input by the second receive filter.

Optionally, the first receive frequency band, the second receive frequency band, and the third receive frequency band are separately included in different receive frequency bands defined by the 3GPP. That is, the first receive frequency band, the second receive frequency band, and the third receive frequency band are three independent receive frequency bands. Optionally, the first receiving processing circuit and the first receive filter correspond to one receiver, and the second receiving processing circuit and the second receive filter correspond to another receiver. It should be understood that two receivers in the communication apparatus may receive signals at three independent receive frequency bands. In this implementation method, the communication apparatus transmits signals at three independent transmit frequency bands by using two transmission processing circuits and two transmit filters, and receives signals at three independent receive frequency bands by using two receiving processing circuits and two receive filters. The quantity of the filters is relatively small, and therefore the communication apparatus has a relatively small size and low costs.

In an optional implementation method, the first transmission processing circuit is further configured to output a signal at a fourth transmit frequency band, where a bandwidth interval between the fourth transmit frequency band and the first transmit frequency band is less than or equal to the first threshold, and a bandwidth interval between the fourth transmit frequency band and the second transmit frequency band is less than or equal to the first threshold. The first transmit frequency band includes the part of the frequency band of 729 MHz to 746 MHz, the second transmit frequency band includes the part of the frequency band of 746 MHz to 756 MHz, and the fourth transmit frequency band includes a part of the frequency band of 756 MHz to 768 MHz; or the first transmit frequency band includes the part of the frequency band of 746 MHz to 756 MHz, the second transmit frequency band includes the part of the frequency band of 756 MHz to 768 MHz, and the fourth transmit frequency band includes the part of the frequency band of 729 MHz to 746 MHz; or the first transmit frequency band includes the part of the frequency band of 729 MHz to 746 MHz, the second transmit frequency band includes the part of the frequency band of 756 MHz to 768 MHz, and the fourth transmit frequency band includes a part of the frequency band of 746 MHz to 756 MHz. The first transmit filter is further configured to filter a signal output by the first transmission processing circuit to obtain the signal at the fourth transmit frequency band. Optionally, the fourth transmit frequency band is a complete frequency band defined by the 3 GPP.

Optionally, the first transmit frequency band, the second transmit frequency band and the fourth transmit frequency band are separately included in different transmit frequency bands defined by the 3GPP. That is, the first transmit frequency band, the second transmit frequency band and the fourth transmit frequency band are three independent transmit frequency bands. In this implementation, the communication apparatus transmits signals at three independent transmit frequency bands by using one transmission processing circuit and one transmit filter, that is, the signals at the three transmit frequency bands share one transmission processing circuit and one transmit filter. The communication apparatus has a relatively small size and low costs.

In an optional implementation method, the first transmission processing circuit is specifically configured to output the signal at the first transmit frequency band, the signal at the second transmit frequency band, and the signal at the fourth transmit frequency band. The first transmit filter is specifically configured to filter a signal output by the first transmission processing circuit to obtain the signal at the first transmit frequency band, the signal at the second transmit frequency band, and the signal at the fourth transmit frequency band.

In an optional implementation method, the communication apparatus further includes a third receiving processing circuit and a third receive filter connected to the third receiving processing circuit. The third receive filter is configured to filter an input signal to obtain a signal at a fourth receive frequency band and a signal at a fifth receive frequency band, where a bandwidth interval between the fourth receive frequency band and the fifth receive frequency band is less than or equal to the second threshold. The fourth receive frequency band includes a part of a frequency band of 777 MHz to 787 MHz, and the fifth receive frequency band includes a part of a frequency band of 788 MHz to 798 MHz. The third receiving processing circuit is configured to receive the signal at the fourth receive frequency band and the signal at the fifth receive frequency band that are input by the third receive filter.

Optionally, the fourth receive frequency band and the fifth receive frequency band are separately included in different receive frequency bands defined by the 3GPP. That is, the fourth receive frequency band and the fifth receive frequency band are two independent receive frequency bands. Optionally, the third receiving processing circuit and the fourth receive filter correspond to one receiver. It should be understood that one receiver in the communication apparatus may receive signals at two independent receive frequency bands. In this implementation method, the communication apparatus transmits signals at three independent transmit frequency bands by using two transmission processing circuits and two transmit filters, and receives signals at two independent receive frequency bands by using one receiving processing circuit and one receive filter. The quantity of filters is small, and therefore the communication apparatus has a relatively small size and low costs.

In an optional implementation method, the communication apparatus further includes a fourth receiving processing circuit and a fourth receive filter connected to the fourth receiving processing circuit. The fourth receive filter is configured to filter an input signal to obtain a signal at a sixth receive frequency band, where a bandwidth interval between the sixth receive frequency band and the fourth receive frequency band is greater than the second threshold, a bandwidth interval between the sixth receive frequency band and the fifth receive frequency band is greater than the second threshold, the sixth receive frequency band includes a part of a frequency band of 699 MHz to 716 MHz, and the third receive filter and the fourth receive filter are included in a same multiplexer. The fourth receiving processing circuit is configured to receive the signal at the sixth receive frequency band that is input by the fourth receive filter.

Optionally, the fourth receive frequency band, the fifth receive frequency band and the sixth receive frequency band are separately included in different receive frequency bands defined by the 3GPP. That is, the fourth receive frequency band, the fifth receive frequency band and the sixth receive frequency band are three independent receive frequency bands. In this implementation method, the communication apparatus transmits signals at three independent transmit frequency bands by using two transmission processing circuits and two transmit filters, and receives signals at three independent receive frequency bands by using two receiving processing circuits and two receive filters. The quantity of the filters is relatively small, and therefore the communication apparatus has a relatively small size and low costs.

According to a second aspect, an embodiment of this application provides a communication apparatus, including a first receiving processing circuit and a first receive filter connected to the first receiving processing circuit. The first receive filter is configured to filter an input signal to obtain a signal at a first receive frequency band and a signal at a second receive frequency band, where a bandwidth interval between the first receive frequency band and the second receive frequency band is less than or equal to a second threshold. The first receive frequency band includes a part of a frequency band of 832 MHz to 862 MHz and the second receive frequency band includes a part of a frequency band of 880 MHz to 915 MHz; or the first receive frequency band includes a part of a frequency band of 777 MHz to 787 MHz and the second receive frequency band includes a part of a frequency band of 788 MHz to 798 MHz. The first receiving processing circuit is configured to receive the signal at the first receive frequency band and the signal at the second receive frequency band that are input by the first receive filter.

Optionally, the first receive frequency band and the second receive frequency band are separately included in independent and different receive frequency bands defined by the 3GPP. In this embodiment of this application, the communication apparatus receives signals at two independent receive frequency bands by using one receiving processing circuit and one receive filter, that is, the signals at the two receive frequency bands share one receiving processing circuit and one receive filter. The communication apparatus has a relatively small size and low costs.

In an optional implementation method, the communication apparatus further includes a second receiving processing circuit and a second receive filter connected to the second receiving processing circuit. The second receive filter is configured to filter an input signal to obtain a signal at a third receive frequency band, where a bandwidth interval between the third receive frequency band and the first receive frequency band is greater than the second threshold; a bandwidth interval between the third receive frequency band and the second receive frequency band is greater than the second threshold; and the first receive frequency band includes the part of the frequency band of 832 MHz to 862 MHz, the second receive frequency band includes the part of the frequency band of 880 MHz to 915 MHz, and the third receive frequency band includes a part of a frequency band of 703 MHz to 733 MHz; or the first receive frequency band includes the part of the frequency band of 777 MHz to 787 MHz, the second receive frequency band includes the part of the frequency band of 788 MHz to 798 MHz, and the third receive frequency band includes a part of a frequency band of 699 MHz to 716 MHz. The second receiving processing circuit is configured to receive the signal at the third receive frequency band that is input by the second receive filter.

Optionally, the first receive frequency band, the second receive frequency band, and the third receive frequency band are separately included in different receive frequency bands defined by the 3GPP. That is, the first receive frequency band, the second receive frequency band, and the third receive frequency band are three independent receive frequency bands. Optionally, the first receiving processing circuit and the first receive filter correspond to one receiver, and the second receiving processing circuit and the second receive filter correspond to another receiver. It should be understood that two receivers in the communication apparatus may receive signals at three independent receive frequency bands. In this implementation method, the communication apparatus receives signals at three independent receive frequency bands by using two receiving processing circuits and two receive filters. The quantity of the filters is small, and the communication apparatus has a relatively small size and low costs.

According to a third aspect, an embodiment of this application provides a network device. The network device includes the communication apparatus according to any one of the first aspect to the second aspect.

### BRIEF DESCRIPTION OF DRAWINGS

FIG. 1 is a partial schematic diagram of distribution of transmit frequency bands and receive frequency bands defined by the 3GPP;
FIG. 2 is another partial schematic diagram of distribution of transmit frequency bands and receive frequency bands defined by the 3GPP;
FIG. 3 is a schematic diagram of a structure of a communication apparatus 30 according to an embodiment of this application;
FIG. 4 is a schematic diagram of a structure of another communication apparatus 40 according to an embodiment of this application;
FIG. 5 is a schematic diagram of a structure of another communication apparatus 50 according to an embodiment of this application;
FIG. 6 is a schematic diagram of a structure of another communication apparatus 60 according to an embodiment of this application;
FIG. 7 is a schematic diagram of bandpass of a quadplexer according to an embodiment of this application;
FIG. 8 is a schematic diagram of a structure of another communication apparatus 80 according to an embodiment of this application;
FIG. 9 is a schematic diagram of a structure of another communication apparatus 90 according to an embodiment of this application;
FIG. 10 is a schematic diagram of bandpass of a triplexer according to an embodiment of this application;
FIG. 11 is a schematic diagram of a structure of another communication apparatus 110 according to an embodiment of this application; and
FIG. 12 is a schematic diagram of a structure of another communication apparatus 120 according to an embodiment of this application.

### DESCRIPTION OF EMBODIMENTS

To make a person skilled in the art better understand the solutions provided in embodiments of this application, the following clearly describes the technical solutions in embodiments of this application with reference to the accompanying drawings in embodiments of this application. It is clearly that the described embodiments are merely some but not all of the embodiments of this application.

In embodiments of the specification, the claims, and the accompanying drawings of this application, the terms "first", "second", and the like are intended to distinguish between similar objects, but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

As described in the background, the current mainstream multi-frequency transceiver usually has disadvantages of a large size and high costs. Therefore, a multi-frequency communication apparatus with lower costs and a smaller size needs to be researched. A communication apparatus provided in embodiments of this application transmits or receives signals at two or more independent frequency bands by using a processing circuit (a transmission processing circuit or a receiving processing circuit) and a filter (a transmit filter or a receive filter). In other words, signals at two or more independent frequency bands share a same processing circuit and a same filter (corresponding to a transmitter or a receiver). Because the quantity of filters in the communication apparatus provided in embodiments of this application is less than a quantity of filters in another multi-frequency communication apparatus, the communication apparatus provided in embodiments of this application has lower costs and a smaller size. In addition, because the communication apparatus provided in embodiments of this application has a small quantity of filters, a quantity of paths for filter combination is small, and a multiplexer is easy to implement.

The two or more independent frequency bands processed by the communication apparatus provided in embodiments of this application by using one processing circuit and one filter feature that a bandwidth interval between any two adjacent frequency bands in the two or more independent frequency bands is less than a first threshold. Optionally, the foregoing two or more independent frequency bands are separately included in different frequency bands defined by the 3GPP, that is, any two frequency bands are not included in a same frequency band defined by the 3GPP. The first threshold may be 0 MHz, 3 MHz, 5 MHz, 10 MHz, 20 MHz, or the like. This is not limited in this application. Because the bandwidth interval between any two adjacent frequency bands in the foregoing two or more independent frequency bands is less than the first threshold, these independent frequency bands may be used as one frequency band to share a same processing circuit and a same filter. Assuming that the foregoing two or more independent frequency bands are a first frequency band, a second frequency band, and a third frequency band, and frequencies corresponding to the first frequency band, the second frequency band, and the third frequency band increase or decrease progressively, for a bandwidth interval between any two adjacent frequency bands in the three frequency bands, there are a bandwidth interval between the first frequency band and the second frequency band and a bandwidth interval between the second frequency band and the third frequency band. The bandwidth interval between two frequency bands may be an interval between a cut-off frequency of a frequency band with a lower frequency and a start frequency of a frequency band with a higher frequency. For example, a range of a frequency band is 758 MHz to 788 MHz, a start frequency of the frequency band is 758 MHz, and a cut-off frequency of the frequency band is 788 MHz. For another example, the first frequency band ranges from 758 MHz to 788 MHz, the second frequency band ranges from 791 MHz to 821 MHz, and a bandwidth interval between the first frequency band and the second frequency band is 3 MHz (that is, (791 - 788) MHz). The two or more independent frequency bands processed by the communication apparatus provided in embodiments of this application by using one processing circuit and one filter are described below with reference to accompanying drawings.

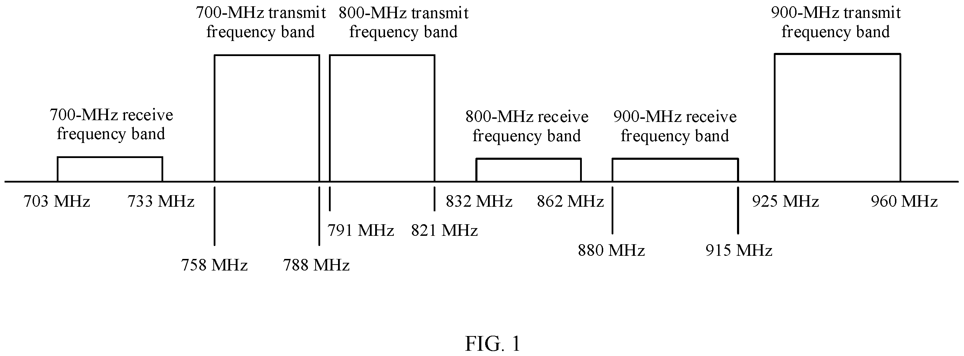

FIG. 1 is a partial schematic diagram of distribution of transmit frequency bands and receive frequency bands defined by the 3rd generation partnership project (3rd Generation Partnership Project, 3GPP). As shown in FIG. 1, 703 MHz to 733 MHz belong to a 700 MHz receive frequency band, 832 MHz to 862 MHz belong to an 800 MHz receive frequency band, 880 MHz to 915 MHz belong to a 900 MHz receive frequency band, 758 MHz to 788 MHz belong to a 700 MHz transmit frequency band, 791 MHz to 821 MHz belong to an 800 MHz transmit frequency band, and 925 MHz to 960 MHz belong to a 900 MHz transmit frequency band. For example, the two or more independent frequency bands processed by the communication apparatus provided in embodiments of this application by using one processing circuit and one filter are 758 MHz to 788 MHz and 791 MHz to 821 MHz. For example, the two or more independent frequency bands processed by the communication apparatus provided in embodiments of this application by using one processing circuit and one filter are 832 MHz to 862 MHz and 880 MHz to 915 MHz.

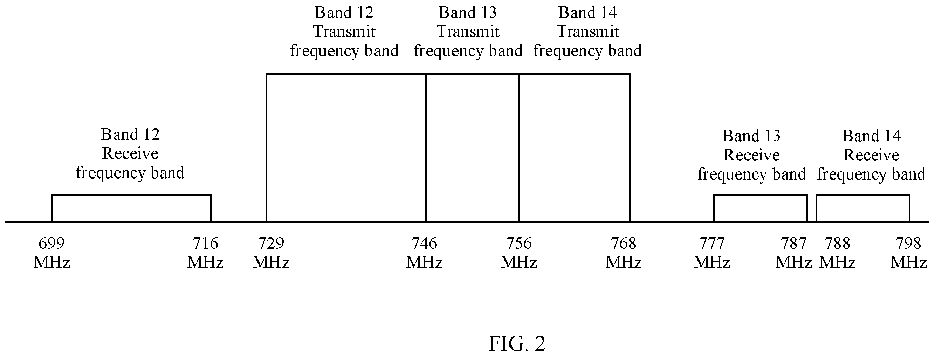

FIG. 2 is another partial schematic diagram of distribution of transmit frequency bands and receive frequency bands defined by the 3GPP. As shown in FIG. 2, 699 MHz to 716 MHz belong to a receive frequency band Band 12, 777 MHz to 787 MHz belong to a receive frequency band Band 13, 788 MHz to 798 MHz belong to a receive frequency band Band 14, 729 MHz to 746 MHz belong to a transmit frequency band Band 12, 746 MHz to 756 MHz belong to a transmit frequency band Band 13, and 756 MHz to 768 MHz belong to a transmit frequency band Band 14. For example, the two or more independent frequency bands processed by the communication apparatus provided in embodiments of this application by using one processing circuit and one filter are 729 MHz to 746 MHz, 746 MHz to 756 MHz and 756 MHz to 768 MHz. For example, the two or more independent frequency bands processed by the communication apparatus provided in embodiments of this application by using one processing circuit and one filter are 777 MHz to 787 MHz and 788 MHz to 7987 MHz.

The foregoing describes some features of the communication apparatus provided in embodiments of this application. The following describes some optional architectures of the communication apparatus provided in embodiments of this application.

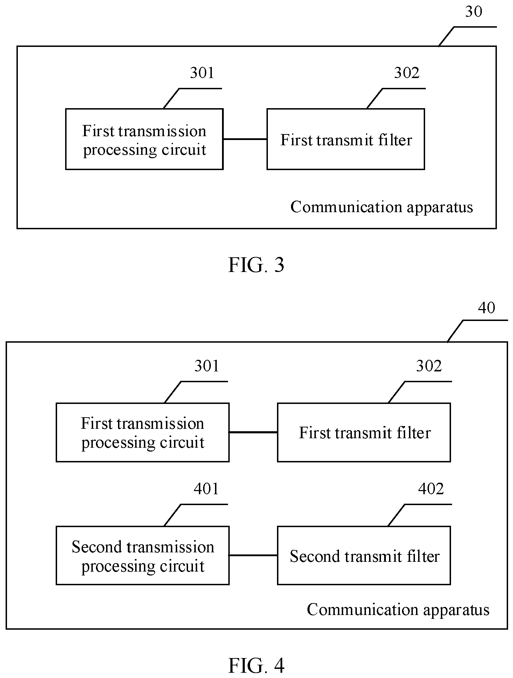

FIG. 3 is a schematic diagram of a structure of a communication apparatus 30 according to an embodiment of this application. As shown in FIG. 3, the communication apparatus 30 includes a first transmission processing circuit 301 and a first transmit filter 302 connected to the first transmission processing circuit 301.

The first transmission processing circuit 301 is configured to output a signal at a first transmit frequency band and a signal at a second transmit frequency band, where a bandwidth interval between the first transmit frequency band and the second transmit frequency band is less than or equal to a first threshold. The first transmit frequency band includes a part of a frequency band of 758 MHz to 788 MHz, and the second transmit frequency band includes a part of a frequency band of 791 MHz to 821 MHz; or the first transmit frequency band includes a part of a frequency band of 729 MHz to 746 MHz, and the second transmit frequency band includes a part of a frequency band of 746 MHz to 756 MHz; or the first transmit frequency band includes a part of a frequency band of 746 MHz to 756 MHz, and the second transmit frequency band includes a part of a frequency band of 756 MHz to 768 MHz; or the first transmit frequency band includes a part of a frequency band of 729 MHz to 746 MHz, and the second transmit frequency band includes a part of a frequency band of 756 MHz to 768 MHz.

The first transmit filter 302 is configured to filter a signal output by the first transmission processing circuit to obtain the signal at the first transmit frequency band and/or the signal at the second transmit frequency band.

The communication apparatus in FIG. 3 may be a device that generates and modulates a radio frequency current and transmits a radio wave, such as a telegraph transmitter, a telephone transmitter, a broadcast transmitter, a television transmitter, and an ultrashort wave frequency modulation transmitter. Optionally, the first transmit frequency band and the second transmit frequency band are separately included in different transmit frequency bands defined by the 3GPP. That is, the first transmit frequency band and the second transmit frequency band are two independent transmit frequency bands. For example, one of the first transmit frequency band and the second transmit frequency band includes the part of the frequency band of 758 MHz to 788 MHz, and the other includes the part of the frequency band of 791 MHz to 821 MHz. For example, one of the first transmit frequency band and the second transmit frequency band includes the part of the frequency band of 729 MHz to 746 MHz, and the other includes the part of the frequency band of 746 MHz to 756 MHz. For example, one of the first transmit frequency band and the second transmit frequency band includes the part of the frequency band of 729 MHz to 746 MHz, and the other includes the part of the frequency band of 756 MHz to 768 MHz. For example, one of the first transmit frequency band and the second transmit frequency band includes the part of the frequency band of 746 MHz to 756 MHz, and the other includes the part of the frequency band of 756 MHz to 768 MHz. In some embodiments, the first transmission processing circuit 301 and the first transmit filter 302 correspond to one transmitter in the communication apparatus. That is, one transmitter in the communication apparatus in FIG. 3 may transmit signals at two independent frequency bands, and the quantity of transmitters is relatively small.

In some embodiments, the first transmission processing circuit 301 is further configured to output a signal at a fourth transmit frequency band, where a bandwidth interval between the fourth transmit frequency band and the first transmit frequency band is less than or equal to the first threshold, and a bandwidth interval between the fourth transmit frequency band and the second transmit frequency band is less than or equal to the first threshold. The first transmit filter 302 is further configured to filter a signal output by the first transmission processing circuit to obtain the signal at the fourth transmit frequency band. Optionally, the first transmission processing circuit 301 is specifically configured to output the signal at the first transmit frequency band, the signal at the second transmit frequency band, and the signal at the fourth transmit frequency band. The first transmit filter 302 is specifically configured to filter the signal output by the first transmission processing circuit to obtain the signal at the first transmit frequency band, the signal at the second transmit frequency band, and the signal at the fourth transmit frequency band. Optionally, the first transmit frequency band, the second transmit frequency band and the fourth transmit frequency band are separately included in different transmit frequency bands defined by the 3GPP. That is, the first transmit frequency band, the second transmit frequency band and the fourth transmit frequency band are three independent transmit frequency bands. For example, the first transmit frequency band includes the part of the frequency band of 729 MHz to 746 MHz, the second transmit frequency band includes the part of the frequency band of 746 MHz to 756 MHz, and the fourth transmit frequency band includes a part of a frequency band of 756 MHz to 768 MHz. For example, the first transmit frequency band includes the part of the frequency band of 746 MHz to 756 MHz, the second transmit frequency band includes the part of the frequency band of 756 MHz to 768 MHz, and the fourth transmit frequency band includes the part of the frequency band of 729 MHz to 746 MHz. For example, the first transmit frequency band includes the part of the frequency band of 729 MHz to 746 MHz, the second transmit frequency band includes the part of the frequency band of 756 MHz to 768 MHz, and the fourth transmit frequency band includes a part of a frequency band of 746 MHz to 756 MHz. It may be understood that the communication apparatus in FIG. 3 transmits signals at three independent frequency bands by using the first transmission processing circuit 301 and the first transmit filter 302, and the quantity of the transmission processing circuits and the quantity of the filters are relatively small.

FIG. 4 is a schematic diagram of a structure of another communication apparatus 40 according to an embodiment of this application. Compared with the communication apparatus 30 in FIG. 3, the communication apparatus 40 in FIG. 4 further includes another transmission processing circuit and another transmit filter. As shown in FIG. 4, compared with the communication apparatus 30 in FIG. 3, the communication apparatus 40 further includes a second transmission processing circuit 401 and a second transmit filter 402 connected to the second transmission processing circuit 401.

The second transmission processing circuit 401 is configured to output a signal at a third transmit frequency band, where a bandwidth interval between the third transmit frequency band and the first transmit frequency band is greater than the first threshold, and a bandwidth interval between the third transmit frequency band and the second transmit frequency band is greater than the first threshold.

The second transmit filter 402 is configured to filter a signal output by the second transmission processing circuit to obtain the signal at the third transmit frequency band, where the first transmit filter and the second transmit filter are included in a same multiplexer.

In some embodiments, both the first transmit filter 302 and the second transmit filter 402 are connected to a same antenna port. A multiplexer is an umbrella term for devices such as a duplexer, a triplexer, a quadplexer, and a hexaplexer. A multiplexer has a single input port and multiple output ports. A multiplexer includes a set of non-superposition filters, which are combined to ensure that they are not loaded with each other and outputs of the filters are highly isolated from each other. A triplexer is constituted by three filters (or ports) that share one node (or port). A quadplexer combines four filters to share one node (or port). That the first transmit filter and the second transmit filter are included in a same multiplexer may be understood as that the duplexer combines the first transmit filter 302 and the second transmit filter 402. Optionally, the first transmit frequency band, the second transmit frequency band and the third transmit frequency band are separately included in different transmit frequency bands defined by the 3GPP. That is, the first transmit frequency band, the second transmit frequency band and the third transmit frequency band are three independent transmit frequency bands. For example, one of the first transmit frequency band and the second transmit frequency band includes the part of the frequency band of 758 MHz to 788 MHz, and the other includes the part of the frequency band of 791 MHz to 821 MHz, and the third transmit frequency band includes a part of a frequency band of 925 MHz to 960 MHz. In this example, the communication apparatus may use the three transmit frequency bands. For example, one of the first transmit frequency band and the second transmit frequency band includes the part of the frequency band of 832 MHz to 862 MHz, and the other includes the part of the frequency band of 880 MHz to 915 MHz, and the third transmit frequency band includes a part of a frequency band of 925 MHz to 960 MHz. In this example, the communication apparatus may use the three transmit frequency bands. For example, the first transmit frequency band includes the part of the frequency band of 729 MHz to 746 MHz, the second transmit frequency band includes the part of the frequency band of 746 MHz to 756 MHz, and the third transmit frequency band includes a part of a frequency band of 756 MHz to 768 MHz. For example, the first transmit frequency band includes the part of the frequency band of 746 MHz to 756 MHz, the second transmit frequency band includes the part of the frequency band of 756 MHz to 768 MHz, and the third transmit frequency band includes the part of the frequency band of 729 MHz to 746 MHz. For example, the first transmit frequency band includes the part of the frequency band of 729 MHz to 746 MHz, the second transmit frequency band includes the part of the frequency band of 756 MHz to 768 MHz, and the third transmit frequency band includes a part of a frequency band of 746 MHz to 756 MHz.

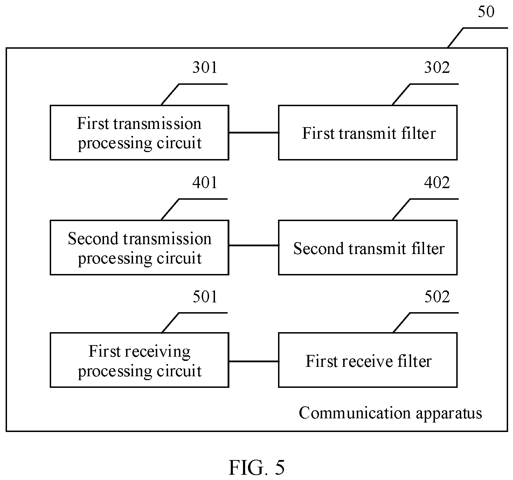

FIG. 5 is a schematic diagram of a structure of another communication apparatus 50 according to an embodiment of this application. Compared with the communication apparatus 40 in FIG. 4, the communication apparatus 50 in FIG. 5 further includes a receiving processing circuit and a receive filter, that is, a first receiving processing circuit 501 and a first receive filter 502 connected to the first receiving processing circuit 501. The first receive filter 502 is configured to filter an input signal to obtain a signal at a first receive frequency band and a signal at a second receive frequency band, where a bandwidth interval between the first receive frequency band and the second receive frequency band is less than or equal to a second threshold. The first receiving processing circuit 501 is configured to receive the signal at the first receive frequency band and the signal at the second receive frequency band that are input by the first receive filter 502. The communication apparatus in FIG. 5 may be a transceiver, for example, a base station. A transceiver refers to a communication device in which both a receiving part (corresponding to a receiver) and a transmitting part (corresponding to a transmitter) are installed in a chassis or a rack, and is used in a mobile station. In some embodiments, both the first transmit filter 302, the second transmit filter 402 and the first receive filter 502 are connected to a same antenna port. Optionally, the first receive frequency band and the second receive frequency band are separately included in different receive frequency bands defined by the 3GPP. That is, the first receive frequency band and the second receive frequency band are two independent transmit frequency bands. For example, one of the first receive frequency band and the second receive frequency band includes a part of a frequency band of 832 MHz to 862 MHz, and the other includes a part of a frequency band of 880 MHz to 915 MHz. For example, one of the first receive frequency band and the second receive frequency band includes a part of a frequency band of 777 MHz to 787 MHz, and the other includes a part of a frequency band of 788 MHz to 798 MHz. In some embodiments, the first receiving processing circuit 501 and the first receive filter 502 correspond to one receiver in the communication apparatus. That is, one receiver in the communication apparatus in FIG. 5 can receive signals at two independent frequency bands, and the quantity of receivers is relatively small.

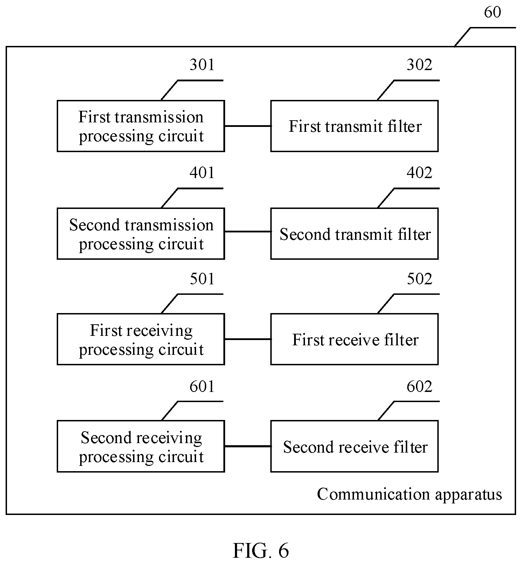

FIG. 6 is a schematic diagram of a structure of another communication apparatus 60 according to an embodiment of this application. Compared with the communication apparatus 50 in FIG. 5, the communication apparatus 60 in FIG. 6 further includes a receiving processing circuit and a receive filter, that is, a second receiving processing circuit 601 and a second receive filter 602 connected to the second receiving processing circuit 601. The second receive filter 602 is configured to filter an input signal to obtain a signal at a third receive frequency band, where a bandwidth interval between the third receive frequency band and the first receive frequency band is greater than the second threshold, and a bandwidth interval between the third receive frequency band and the second receive frequency band is greater than the second threshold. The second receiving processing circuit 601 is configured to receive the signal at the third receive frequency band that is input by the second receive filter. Optionally, the first receive frequency band, the second receive frequency band, and the third receive frequency band are separately included in different receive frequency bands defined by the 3GPP. That is, the first receive frequency band, the second receive frequency band, and the third receive frequency band are three independent receive frequency bands. For example, the first receive frequency band includes the part of the frequency band of 832 MHz to 862 MHz, the second receive frequency band includes the part of the frequency band of 880 MHz to 915 MHz, and the third receive frequency band includes a part of a frequency band of 703 MHz to 733 MHz. Optionally, the first transmit filter 302, the second transmit filter 402, the first receive filter 502, and the second receive filter 602 are included in a same quadplexer. In some embodiments, the first transmit filter 302, the second transmit filter 402, the first receive filter 502, and the second receive filter 602 are connected to a same antenna port. In some embodiments, the communication apparatus in FIG. 6 sends signals at three frequency bands: 758 MHz to 788 MHz, 791 MHz to 821 MHz, and 925 MHz to 960 MHz; and receives signals at three frequency bands: 832 MHz to 862 MHz, 880 MHz to 915 MHz, and 703 MHz to 733 MHz.

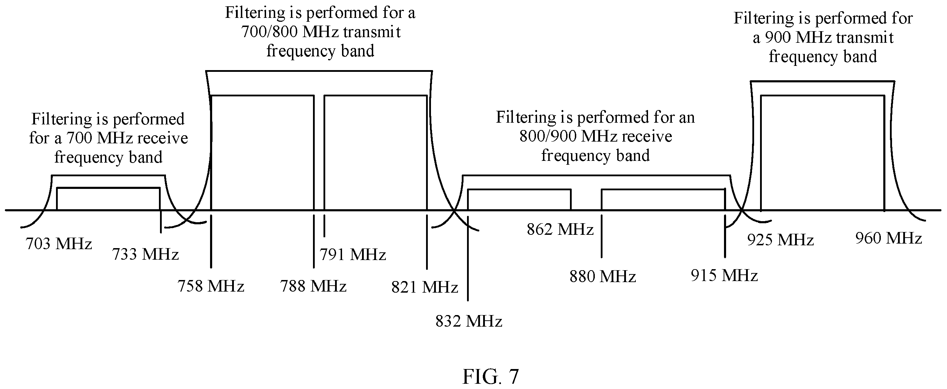

FIG. 7 is a schematic diagram of bandpass of a quadplexer according to an embodiment of this application, and is the schematic diagram of bandpass of a quadplexer included in the communication apparatus in FIG. 6. As shown in FIG. 7, 758 MHz to 788 MHz (700 MHz transmit frequency band) and 791 MHz to 821 MHz (800 MHz transmit frequency band) share a same filter (the first transmit filter 302), and filtering is performed for 925 MHz to 960 MHz by using the second transmit filter 402. 832 MHz to 862 MHz (800 MHz receive frequency band) and 880 MHz to 915 MHz (900 MHz receive frequency band) share a same filter (the first receive filter 502), and filtering is performed for 703 MHz to 733 MHz by using the second receive filter 602. It can be learned that the communication apparatus 60 in FIG. 6 implements that multiple frequency bands share a filter, that is, two or more transmit frequency bands share a same filter, and two or more receive frequency bands share a same filter, so that a quantity combination paths of the filters is reduced, and a multiplexer is easy to implement. It may be understood that the communication apparatus in FIG. 6 may use a quadplexer to filter signals at three independent transmit frequency bands and signals at three independent receive frequency bands. The communication apparatus 60 in FIG. 6 may be a tri-band communication apparatus, for example, a tri-band transceiver. A currently used tri-band communication apparatus generally uses three transmit filters to filter signals at three transmit frequency bands, that is, each transmit filter filters signals at one transmit frequency band; and uses three receive filters to filter signals at three receive frequency bands, that is, each receive filter filters signals at one receive frequency band. That is, the current tri-band communication apparatus uses a hexaplexer to filter signals at three independent transmit frequency bands and signals at three independent receive frequency bands. It can be learned that, compared with the currently used multi-frequency communication apparatus, the communication apparatus in FIG. 6 has a smaller quantity of filters, and the multiplexer is easy to implement.

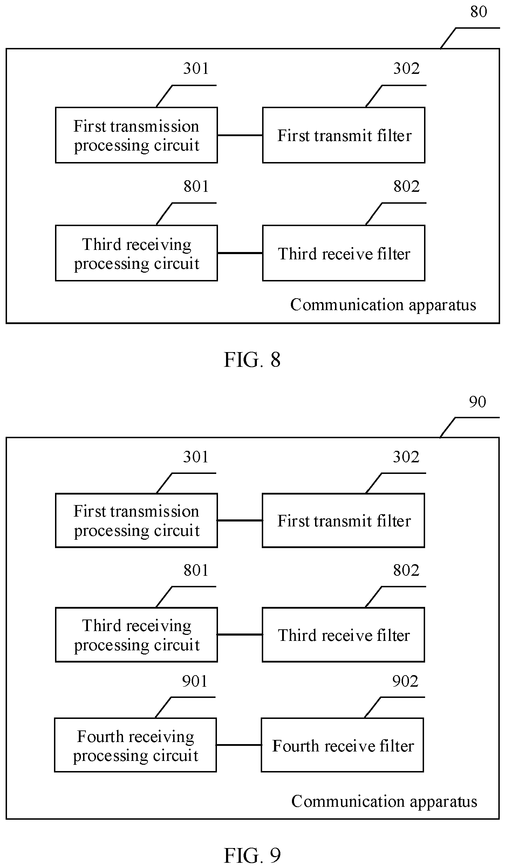

FIG. 8 is a schematic diagram of a structure of another communication apparatus 80 according to an embodiment of this application. Compared with the communication apparatus 30 in FIG. 3, the communication apparatus 80 in FIG. 8 further includes a receiving processing circuit and a receive filter, that is, a third receiving processing circuit 801 and a third receive filter 802 connected to the third receiving processing circuit 801. The third receive filter 802 is configured to filter an input signal to obtain a signal at a fourth receive frequency band and a signal at a fifth receive frequency band, where a bandwidth interval between the fourth receive frequency band and the fifth receive frequency band is less than or equal to a second threshold. The third receiving processing circuit 801 is configured to receive the signal at the fourth receive frequency band and the signal at the fifth receive frequency band that are input by the third receive filter. The second threshold may be the same as or different from the first threshold. The second threshold may be 0 MHz, 3 MHz, 5 MHz, 10 MHz, 20 MHz, or the like. This is not limited in this application. In some embodiments, both the first transmit filter 302 and the third receive filter 802 are connected to a same antenna port. The communication apparatus 80 in FIG. 8 may be a transceiver, for example, a base station. Optionally, the fourth receive frequency band and the fifth receive frequency band are separately included in different transmit frequency bands defined by the 3GPP. That is, the fourth receive frequency band and the fifth receive frequency band are two independent receive frequency bands. For example, the fourth receive frequency band includes a part of a frequency band of 777 MHz to 787 MHz, and the fifth receive frequency band includes a part of a frequency band of 788 MHz to 798 MHz. For example, the fourth receive frequency band includes a part of a frequency band of 832 MHz to 862 MHz, and the fifth receive frequency band includes a part of a frequency band of 880 MHz to 915 MHz. In some embodiments, the third receiving processing circuit 801 and the third receive filter 802 correspond to one receiver in the communication apparatus. That is, one receiver in the communication apparatus 80 in FIG. 8 may receive signals at two independent frequency bands, and the quantity of receivers is relatively small.

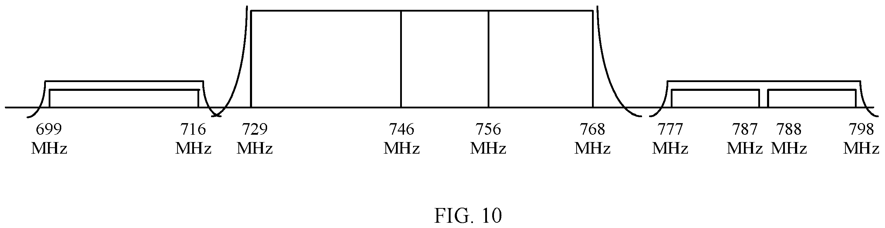

FIG. 9 is a schematic diagram of a structure of another communication apparatus 90 according to an embodiment of this application. Compared with the communication apparatus 80 in FIG. 8, the communication apparatus 90 in FIG. 8 further includes a fourth receiving processing circuit 901 and a fourth receive filter 902 connected to the fourth receiving processing circuit 901. The fourth receive filter 902 is configured to filter an input signal to obtain a signal at a sixth receive frequency band, where a bandwidth interval between the sixth receive frequency band and the fourth receive frequency band is greater than the second threshold, and a bandwidth interval between the sixth receive frequency band and the fifth receive frequency band is greater than the second threshold, and the third receive filter and the fourth receive filter are included in a same multiplexer. The fourth receiving processing circuit 901 is configured to receive the signal at the sixth receive frequency band that is input by the fourth receive filter. In some embodiments, both the first transmit filter 302, the third receive filter 802 and the fourth receive filter 902 are connected to a same antenna port. Optionally, the fourth receive frequency band, the fifth receive frequency band and the sixth receive frequency band are separately included in different receive frequency bands defined by the 3 GPP. That is, the fourth receive frequency band, the fifth receive frequency band and the sixth receive frequency band are three independent receive frequency bands. For example, the fourth receive frequency band includes the part of the frequency band of 777 MHz to 787 MHz, the fifth receive frequency band includes the part of the frequency band of 788 MHz to 798 MHz, and the sixth receive frequency band includes a part of a frequency band of 699 MHz to 716 MHz. For example, the fourth receive frequency band includes the part of the frequency band of 832 MHz to 862 MHz, the fifth receive frequency band includes the part of the frequency band of 880 MHz to 915 MHz, and the sixth receive frequency band includes a part of a frequency band of 703 MHz to 733 MHz. Optionally, the first transmit filter 302, the third receive filter 802, and the fourth receive filter 902 are included in a same triplexer. In some embodiments, the communication apparatus in FIG. 9 may send signals at three frequency bands: 729 MHz to 746 MHz, 746 MHz to 756 MHz, and 756 MHz to 768 MHz; and receive signals at three frequency bands: 777 MHz to 787 MHz, 788 MHz to 798 MHz, and 699 MHz to 716 MHz. FIG. 10 is a schematic diagram of bandpass of a triplexer according to an embodiment of this application. FIG. 10 is the schematic diagram of bandpass of a triplexer included in the communication apparatus 90 in FIG. 9. As shown in FIG. 10, 729 MHz to 746 MHz (the transmit frequency band Band 12), 746 MHz to 756 MHz (the Band 13), and 756 MHz to 768 MHz (the transmit frequency band of Band 14) share a same filter (the first transmit filter 302); 777 MHz to 787 MHz (the receive frequency band Band 13) and 788 MHz to 798 MHz (the receive frequency band Band 14) share a same filter (the third receive filter 702); and filtering is performed for 699 MHz to 716 MHz by using the fourth receive filter 802. It can be learned that the communication apparatus 90 in FIG. 9 implements that multiple frequency bands share a filter, that is, two or more transmit frequency bands share a same filter, and two or more receive frequency bands share a same filter, so that a quantity combination paths of the filters is reduced, and a multiplexer is easy to implement. It may be understood that the communication apparatus 90 in FIG. 9 may use a triplexer filter to filter signals at three independent transmit frequency bands and signals at three independent receive frequency bands.

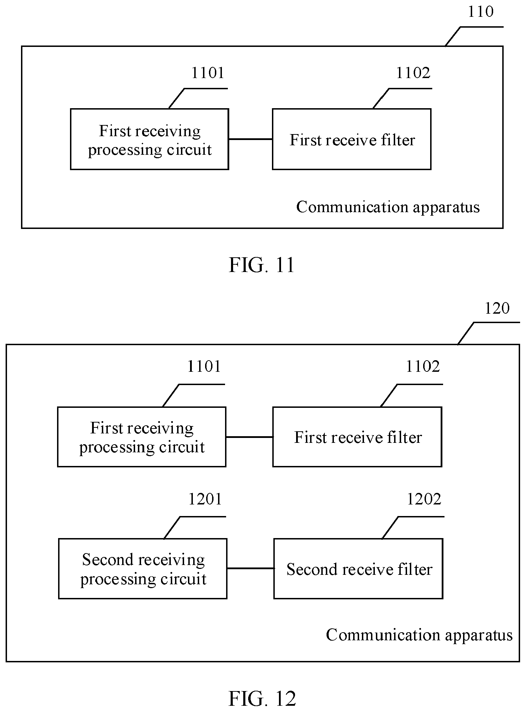

FIG. 11 is a schematic diagram of a structure of another communication apparatus 110 according to an embodiment of this application. As shown in FIG. 10, the communication apparatus 110 includes a first receiving processing circuit 1101 and a first receive filter 1102 connected to the first receiving processing circuit 1101.

The first receive filter 1101 is configured to filter an input signal to obtain a signal at a first receive frequency band and a signal at a second receive frequency band, where a bandwidth interval between the first receive frequency band and the second receive frequency band is less than or equal to a second threshold.

The first receiving processing circuit 1102 is configured to receive the signal at the first receive frequency band and the signal at the second receive frequency band that are input by the first receive filter.

The communication apparatus 110 in FIG. 11 may be a radio receiver. The radio receiver is a device that receives a radio signal and converts it into an original transmitted electrical signal (such as an audio signal or a television signal). Radio receivers may be classified into telegraph receivers, telephone receivers, broadcast receivers (radios), and frequency modulation receivers based on types, radio frequencies, and demodulation methods. Optionally, the first receive frequency band and the second receive frequency band are separately included in different transmit frequency bands defined by the 3 GPP. That is, the first receive frequency band and the second receive frequency band are two independent receive frequency bands. For example, one of the first receive frequency band and the second receive frequency band includes a part of a frequency band of 832 MHz to 862 MHz, and the other includes a part of a frequency band of 880 MHz to 915 MHz. For example, one of the first receive frequency band and the second receive frequency band includes a part of a frequency band of 777 MHz to 787 MHz, and the other includes a part of a frequency band of 788 MHz to 798 MHz.

FIG. 12 is a schematic diagram of a structure of another communication apparatus 120 according to an embodiment of this application. Compared with the communication apparatus 110 in FIG. 11, the communication apparatus 120 in FIG. 12 further includes a second receiving processing circuit 1201 and a second receive filter 1202 connected to the second receiving processing circuit 1201.

The second receive filter 1202 is configured to filter an input signal to obtain a signal at a third receive frequency band, where a bandwidth interval between the third receive frequency band and the first receive frequency band is greater than the second threshold, and a bandwidth interval between the third receive frequency band and the second receive frequency band is greater than the second threshold.

The second receiving processing circuit 1201 is configured to receive the signal at the third receive frequency band that is input by the second receive filter.

In some embodiments, both the first receive filter 1102 and the second receive filter 1202 are connected to a same antenna port. Optionally, the first receive filter 1102 and the second receive filter 1202 are included in a same duplexer. For example, the first receive frequency band includes the part of the frequency band of 832 MHz to 862 MHz, the second receive frequency band includes the part of the frequency band of 880 MHz to 915 MHz, and the third receive frequency band includes a part of a frequency band of 703 MHz to 733 MHz. In some embodiments, the first receive filter 1102 may filter signals at the receive frequency band of 832 MHz to 862 MHz and signals at the receive frequency band of 880 MHz to 915 MHz, and the second receive filter 1202 may filter signals at the receive frequency band of 703 MHz to 733 MHz. For example, the first receive frequency band includes the part of the frequency band of 777 MHz to 787 MHz, the second receive frequency band includes the part of the frequency band of 788 MHz to 798 MHz, and the third receive frequency band includes a part of a frequency band of 699 MHz to 716 MHz. In some embodiments, the first receive filter 1102 may filter signals at the receive frequency band of 777 MHz to 787 MHz and signals at the receive frequency band of 788 MHz to 798 MHz, and the second receive filter 1202 may filter signals at the receive frequency band of 699 MHz to 716 MHz. It should be understood that the duplexer in the communication apparatus 120 may filter signals at three independent receive frequency bands. That is, the communication apparatus implements that multiple frequency bands share a filter, that is, two or more receive frequency bands share a same filter, so that a quantity combination paths of the filters is reduced, and a multiplexer is easy to implement. In addition, the first receiving processing circuit 1101 and the first receive filter 1102 correspond to one receiver. That is, one receiver in the communication apparatus in FIG. 11 and FIG. 12 may receive signals at two independent frequency bands, and the quantity of receivers is relatively small.

A signal transmission process of the communication apparatus is not described in the foregoing embodiments. The following describes the signal transmission process implemented by the communication apparatus in FIG. 4 to FIG. 6.

For example, the signal transmission process implemented by the communication apparatuses in FIG. 4 to FIG. 6 is as follows:
(1) The communication apparatus combines the signal at the first transmit frequency band and the signal at the second transmit frequency band, sends a combined signal to the shared first transmission processing circuit 301 (corresponding to a transmitter) for processing such as signal amplification, and sends the processed signal to the first transmit filter 302 (a post-stage component filter).
(2) After filtering the signal at the first transmit frequency band and the signal at the second transmit frequency band, the first transmit filter 302 transmits the signals through an antenna port.
(3) After processing the signal at the third transmit frequency band by using a function such as signal amplification of the second transmission processing circuit 401, the second transmission processing circuit 401 sends the processed signal at the third transmit frequency band to the second transmit filter 402 (a post-stage component filter). After filtering the signal at the third transmit frequency band, the second transmit filter 402 transmits the signal through the antenna port.

For example, the first transmit frequency band includes the part of the frequency band of 758 MHz to 788 MHz, the second transmit frequency band includes the part of the frequency band of 791 MHz to 821 MHz, and the third transmit frequency band includes the part of the frequency band of 925 MHz to 960 MHz. In this embodiment, the signal at the first transmit frequency band and the signal at the second transmit frequency band share one transmission processing circuit and one transmit filter. After the signal at the third transmit frequency band is amplified and filtered by an independent transmission processing circuit and an independent transmit filter, the signal is transmitted through the antenna port. In this embodiment, the communication apparatus transmits signals at three independent frequency bands by using two transmission processing circuits and two transmit filters. The quantities of transmitters and filters are relatively small, and therefore the communication apparatus has a relatively small size and low costs.

For example, the signal transmission process implemented by the communication apparatuses in FIG. 8 and FIG. 9 is as follows:
(1) The communication apparatus combines the signal at the first transmit frequency band, the signal at the second transmit frequency band, and the signal at the fourth transmit frequency band, sends a combined signal to the shared first transmission processing circuit 301 (corresponding to a transmitter) for processing such as signal amplification, and sends the processed signal to the first transmit filter 302 (a post-stage component filter).
(2) After filtering the signal at the first transmit frequency band, the signal at the second transmit frequency band, and the signal at the fourth transmit frequency band, the first transmit filter 302 transmits the signals through an antenna port.

For example, the first transmit frequency band includes the part of the frequency band of 729 MHz to 746 MHz, the second transmit frequency band includes the part of the frequency band of 746 MHz to 756 MHz, and the fourth transmit frequency band includes the part of the frequency band of 756 MHz to 768 MHz. For example, the first transmit frequency band includes the part of the frequency band of 746 MHz to 756 MHz, the second transmit frequency band includes the part of the frequency band of 756 MHz to 768 MHz, and the fourth transmit frequency band includes the part of the frequency band of 729 MHz to 746 MHz. For example, the first transmit frequency band includes the part of the frequency band of 729 MHz to 746 MHz, the second transmit frequency band includes the part of the frequency band of 756 MHz to 768 MHz, and the fourth transmit frequency band includes the part of the frequency band of 746 MHz to 756 MHz. In this embodiment, the communication apparatus transmits signals at three independent frequency bands by using one transmission processing circuit and one transmit filter. The quantities of transmitters and filters are relatively small, and therefore the communication apparatus has a relatively small size and low costs.

A signal transmission process implemented by the communication apparatus is not described in the foregoing embodiment. The following uses the Band A, the Band B, and the Band C as examples to describe the signal receiving process implemented by the communication apparatus.

For example, the signal receiving process implemented by the communication apparatus in FIG. 6, FIG. 9 and FIG. 12 is as follows:
(1) The communication apparatus performs processing such as filtering and amplification on a received signal at the Band A by using an independent receive filter and an independent receiving processing circuit (a receiver), and then sends the signal to a next-stage signal processing unit.
(2) The communication apparatus filters the received signals at the Band B and the Band C by using a receive filter, performs processing such as amplification on the dual-band signals at the Band B and the Band C output by the receive filter by using a shared receiving processing circuit (a receiver), and then sends them to the next-stage signal processing unit.

For example, the communication apparatus 60 performs processing such as filtering and amplification on the signal at the first receive frequency band (corresponding to the Band B, for example, 832 MHz to 862 MHz) and the signal at the second receive frequency band (corresponding to the Band C, for example, 880 MHz to 915 MHz) by using the first receiving processing circuit 501 and the first receive filter 502; and performs processing such as filtering and amplification on the signal at the third receive frequency band (corresponding to the Band A, for example, 703 MHz to 733 MHz) by using the second receiving processing circuit 601 and the second receive filter 602. For example, the communication apparatus 90 performs processing such as filtering and amplification on the signal at the fourth receive frequency band (corresponding to the Band B, for example, 777 MHz to 787 MHz) and the signal at the fifth receive frequency band (corresponding to the Band C, for example, 788 MHz to 798 MHz) by using the third receiving processing circuit 801 and the third receive filter 802; and performs processing such as filtering and amplification on the signal at the sixth receive frequency band (corresponding to the Band A, for example, 699 MHz to 716 MHz) by using the fourth receiving processing circuit 901 and the fourth receive filter 902. In this embodiment, the communication apparatus receives signals at three independent frequency bands by using two receiving processing circuits and two receive filters. The quantities of receivers and filters are relatively small, and therefore the communication apparatus has a relatively small size and low costs.

An embodiment of this application further provides a network device, including any communication apparatus described in the foregoing embodiments. Optionally, the network device is a base station.

The foregoing descriptions are merely specific implementations of the present invention, but are not intended to limit the protection scope of the present invention. Any modification or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication apparatus, comprising a first transmission processing circuit and a first transmit filter connected to the first transmission processing circuit, wherein
the first transmission processing circuit is configured to output a signal at a first transmit frequency band and a signal at a second transmit frequency band; wherein a bandwidth interval between the first transmit frequency band and the second transmit frequency band is less than or equal to a first threshold; and the first transmit frequency band comprises a part of a frequency band of 758 MHz to 788 MHz, and the second transmit frequency band comprises a part of a frequency band of 791 MHz to 821 MHz; or the first transmit frequency band comprises a part of a frequency band of 729 MHz to 746 MHz, and the second transmit frequency band comprises a part of a frequency band of 746 MHz to 756 MHz; or the first transmit frequency band comprises a part of a frequency band of 746 MHz to 756 MHz, and the second transmit frequency band comprises a part of a frequency band of 756 MHz to 768 MHz; or the first transmit frequency band comprises a part of a frequency band of 729 MHz to 746 MHz, and the second transmit frequency band comprises a part of a frequency band of 756 MHz to 768 MHz; and
the first transmit filter is configured to filter a signal output by the first transmission processing circuit to obtain the signal at the first transmit frequency band and/or the signal at the second transmit frequency band.

2. The communication apparatus according to claim 1, wherein the first transmit frequency band comprises the part of the frequency band of 758 MHz to 788 MHz, the second transmit frequency band comprises the part of the frequency band of 791 MHz to 821 MHz, and the communication apparatus further comprises a second transmission processing circuit and a second transmit filter connected to the second transmission processing circuit, wherein
the second transmission processing circuit is configured to output a signal at a third transmit frequency band, wherein a bandwidth interval between the third transmit frequency band and the first transmit frequency band is greater than the first threshold, a bandwidth interval between the third transmit frequency band and the second transmit frequency band is greater than the first threshold, and the third transmit frequency band comprises a part of a frequency band of 925 MHz to 960 MHz; and
the second transmit filter is configured to filter a signal output by the second transmission processing circuit to obtain the signal at the third transmit frequency band, wherein the first transmit filter and the second transmit filter are comprised in a same multiplexer.

3. The communication apparatus according to claim 1 or 2, wherein the communication apparatus further comprises a first receiving processing circuit and a first receive filter connected to the first receiving processing circuit, wherein
the first receive filter is configured to filter an input signal to obtain a signal at a first receive frequency band and a signal at a second receive frequency band, wherein a bandwidth interval between the first receive frequency band and the second receive frequency band is less than or equal to a second threshold, the first receive frequency band comprises a part of a frequency band of 832 MHz to 862 MHz, and the second receive frequency band comprises a part of a frequency band of 880 MHz to 915 MHz; and
the first receiving processing circuit is configured to receive the signal at the first receive frequency band and the signal at the second receive frequency band that are input by the first receive filter.

4. The communication apparatus according to claim 3, wherein the communication apparatus further comprises a second receiving processing circuit and a second receive filter connected to the second receiving processing circuit, wherein
the second receive filter is configured to filter an input signal to obtain a signal at a third receive frequency band, wherein a bandwidth interval between the third receive frequency band and the first receive frequency band is greater than the second threshold, a bandwidth interval between the third receive frequency band and the second receive frequency band is greater than the second threshold, and the third receive frequency band comprises a part of a frequency band of 703 MHz to 733 MHz; and
the second receiving processing circuit is configured to receive the signal at the third receive frequency band that is input by the second receive filter.

5. The communication apparatus according to claim 1, wherein
the first transmission processing circuit is further configured to output a signal at a fourth transmit frequency band, wherein a bandwidth interval between the fourth transmit frequency band and the first transmit frequency band is less than or equal to the first threshold; a bandwidth interval between the fourth transmit frequency band and the second transmit frequency band is less than or equal to the first threshold; and the first transmit frequency band comprises the part of the frequency band of 729 MHz to 746 MHz, the second transmit frequency band comprises the part of the frequency band of 746 MHz to 756 MHz, and the fourth transmit frequency band comprises a part of the frequency band of 756 MHz to 768 MHz; or the first transmit frequency band comprises the part of the frequency band of 746 MHz to 756 MHz, the second transmit frequency band comprises the part of the frequency band of 756 MHz to 768 MHz, and the fourth transmit frequency band comprises a part of the frequency band of 729 MHz to 746 MHz; or the first transmit frequency band comprises the part of the frequency band of 729 MHz to 746 MHz, the second transmit frequency band comprises the part of the frequency band of 756 MHz to 768 MHz, and the fourth transmit frequency band comprises a part of the frequency band of 746 MHz to 756 MHz; and
the first transmit filter is further configured to filter a signal output by the first transmission processing circuit to obtain the signal at the fourth transmit frequency band.

6. The communication apparatus according to claim 5, wherein
the first transmission processing circuit is specifically configured to output the signal at the first transmit frequency band, the signal at the second transmit frequency band, and the signal at the fourth transmit frequency band; and
the first transmit filter is specifically configured to filter a signal output by the first transmission processing circuit to obtain the signal at the first transmit frequency band, the signal at the second transmit frequency band, and the signal at the fourth transmit frequency band.

7. The communication apparatus according to claim 5 or 6, wherein the communication apparatus further comprises:
a third receiving processing circuit and a third receive filter connected to the third receiving processing circuit, wherein
the third receive filter is configured to filter an input signal to obtain a signal at a fourth receive frequency band and a signal at a fifth receive frequency band, wherein a bandwidth interval between the fourth receive frequency band and the fifth receive frequency band is less than or equal to the second threshold, the fourth receive frequency band comprises a part of a frequency band of 777 MHz to 787 MHz, and the fifth receive frequency band comprises a part of a frequency band of 788 MHz to 798 MHz; and
the third receiving processing circuit is configured to receive the signal at the fourth receive frequency band and the signal at the fifth receive frequency band that are input by the third receive filter.

8. The communication apparatus according to claim 7, wherein the communication apparatus further comprises a fourth receiving processing circuit and a fourth receive filter connected to the fourth receiving processing circuit, wherein
the fourth receive filter is configured to filter an input signal to obtain a signal at a sixth receive frequency band, wherein a bandwidth interval between the sixth receive frequency band and the fourth receive frequency band is greater than the second threshold, and a bandwidth interval between the sixth receive frequency band and the fifth receive frequency band is greater than the second threshold, the sixth receive frequency band comprises a part of a frequency band of 699 MHz to 716 MHz, and the third receive filter and the fourth receive filter are comprised in a same multiplexer; and
the fourth receiving processing circuit is configured to receive the signal at the sixth receive frequency band that is input by the fourth receive filter.

9. A communication apparatus, comprising a first receiving processing circuit and a first receive filter connected to the first receiving processing circuit, wherein
the first receive filter is configured to filter an input signal to obtain a signal at a first receive frequency band and a signal at a second receive frequency band, wherein a bandwidth interval between the first receive frequency band and the second receive frequency band is less than or equal to a second threshold; and the first receive frequency band comprises a part of a frequency band of 832 MHz to 862 MHz and the second receive frequency band comprises a part of a frequency band of 880 MHz to 915 MHz; or the first receive frequency band comprises a part of a frequency band of 777 MHz to 787 MHz and the second receive frequency band comprises a part of a frequency band of 788 MHz to 798 MHz; and
the first receiving processing circuit is configured to receive the signal at the first receive frequency band and the signal at the second receive frequency band that are input by the first receive filter.

10. The communication apparatus according to claim 9, wherein the communication apparatus further comprises a second receiving processing circuit and a second receive filter connected to the second receiving processing circuit, wherein
the second receive filter is configured to filter an input signal to obtain a signal at a third receive frequency band, wherein a bandwidth interval between the third receive frequency band and the first receive frequency band is greater than the second threshold; a bandwidth interval between the third receive frequency band and the second receive frequency band is greater than the second threshold; and the first receive frequency band comprises the part of the frequency band of 832 MHz to 862 MHz, the second receive frequency band comprises the part of the frequency band of 880 MHz to 915 MHz, and the third receive frequency band comprises a part of a frequency band of 703 MHz to 733 MHz; or the first receive frequency band comprises the part of the frequency band of 777 MHz to 787 MHz, the second receive frequency band comprises the part of the frequency band of 788 MHz to 798 MHz, and the third receive frequency band comprises a part of a frequency band of 699 MHz to 716 MHz; and
the second receiving processing circuit is configured to receive the signal at the third receive frequency band that is input by the second receive filter.

11. A network device, comprising the communication apparatus according to any one of claims 1 to 10.
